# EUROPEAN PATENT APPLICATION

(11) **EP 2 389 814 A1**
(43) Date of publication of application: **30.11.2011**
(21) Application number: 11165056.0
(22) Date of filing: 06.05.2011
(51) Int. Cl.: A23B 7/154, A23B 7/16, A23B 9/14, A23B 9/26, A01N 3/00, A01N 3/02, A01N 25/22, A01N 25/24, A01N 27/00

(54) **Waxy coatings on plant parts**

(30) Priority: 25.05.2010 US 347977 P
(71) Applicant: Rohm and Haas Company, Philadelphia, Pennsylvania 19106-2399 (US)
(72) Inventor: Holcroft, Deidre Margaret, Davis, CA 95618 (US); Pereira, Walter Sergio Pinto, 13.418-160, Piracicaba - SP (BR)
(74) Representative: Buckley, Guy Julian

(57) **Abstract**

There is provided a method of treating plant parts comprising forming a coating on the surface of said plant parts by applying a layer of a coating composition to said surface of said plant parts, wherein said coating composition comprises
(a) one or more wax, and
(b) one or more cyclopropene compound.

## Description

### BACKGROUND:

It is sometimes desired to expose plant parts to a cyclopropene compound. For example, in some cases, exposure of plant parts to a cyclopropene compound will inhibit the effects of ethylene, and such inhibition is sometimes desirable. For example, some plant parts are harvested when they are at a stage of ripeness prior to the stage of ripeness at which it is most desirable to consume them. For another example, some plant parts are harvested at a stage of ripeness that is either at or immediately before the stage at which it is most desirable to consume them. In either example, such plant parts are sometimes stored and/or shipped, and it is desirable to delay further ripening during shipping and/or storage to be sure that the plant parts do not become over-ripe prior to purchase and/or consumption by the consumer.

In some cases, certain fruits or vegetables are normally given a coating prior to shipment and/or storage. US 6,165,529 describes coatings for fresh produce that contains hydrolyzed polyvinyl alcohol, soluble starch, and surfactant. Some of these coatings prevent water from evaporating from the fruit, thus maintaining fruit quality and preventing loss of weight. It is desired to provide treatments for plant parts that have the advantages that such coatings provide while also providing the advantages provided by treatment with a cyclopropene compound.

### STATEMENT OF THE INVENTION:

In a first aspect of the present invention, there is provided a method of treating plant parts comprising forming a coating on the surface of said plant parts by applying a layer of a coating composition to said surface of said plant parts, wherein said coating composition comprises
(a) one or more wax, and
(b) one or more cyclopropene compound.

### DETAILED DESCRIPTION:

The following definitions are used herein. A "plant part" is a portion of a plant that is separated from a whole plant. "Treatment" of a plant part means bringing that plant part into contact with a composition. Removal of useful plant parts from a whole plant is "harvesting." A "fatty chain" is a hydrocarbon chain having 8 or more carbon atoms. A compound containing one or more fatty chain is a "fatty" compound. A compound that does not contain any fatty chain is a "non-fatty" compound. A "hydrocarbon chain" is a group of covalently bound atoms that contains only atoms of carbon and hydrogen. A "liquid composition" is liquid over a temperature range of at least 15°C to 40°C. A material is "dispersed" in a continuous medium if that material is present as isolated particles of 1 micrometers or larger and if those particles are distributed throughout the continuous medium. A "negligible amount" of an ingredient in a composition is an amount that is 0.05% or less by weight of that ingredient, based on the weight of that composition.

A spreadable solid composition is defined herein as a composition that is capable of being spread as a layer onto plant parts and are mechanically stable over a temperature range of at least 15°C to 40°C when they are not under the mechanical stress of the application process. That is, when a layer of such a composition is present on a surface and is not subject to any mechanical force other than gravity, the layer retains its shape for 5 days or more over a temperature range of at lease 15°C to 40°C. One type of spreadable solid composition is a meltable solid, which becomes a liquid at some temperature higher than 40°C, and that liquid is capable of being spread onto plant parts, subsequently cooling and becoming mechanically stable. Another type of spreadable solid composition is a semisolid composition.

A semisolid composition is defined herein as a composition that has the following characteristics over a temperature range of at least 15°C to 40°C. These compositions are capable of being spread with an applicator but are mechanically stable when they are not under the mechanical stress of the application process. That is, when a layer of such a composition is present on a surface and is not subject to any mechanical force other than gravity, the layer retains its shape for 5 days or more. Semisolid coating compositions have viscosity at 0.01 sec of 10 Pa*s (100 poise) or higher. When the same composition is put under mechanical stress, such as brushing, the composition is capable of flowing and forming a layer on a surface. Semisolid coating compositions have viscosity at 1,000 see⁻¹ of 1 Pa*s (10 poise) or lower.

The method of the present invention involves treating plant parts. Preferred plant parts are edible and non-edible flowers, buds, blooms, seeds, cuttings, roots, bulbs, fruits, vegetables, leaves, and combinations thereof. More preferred are edible plant parts; more preferred are fruits and vegetables.

Many of the plant parts that are suitable for use in the practice of the present invention can be usefully divided into categories or groups. One useful method for defining such groups is the "Definition and Classification of Commodities," published on or before March 23, 2006, by the Food and Agriculture Organization ("FAO") of the United Nations as a "Draft."

Crop Group 1 is cereals. Crop Group 2 is roots and tubers. Crop Group 3 is sugar crops. Crop Group 4 is pulses, including, for example, beans, and garden pea. Crop Group 5 is nuts. Crop Group 6 is oil-bearing crops, including, for example, soybeans, groundnuts, olives, and canola.

Crop Group 7 is vegetables, including cabbages, artichokes, asparagus, lettuce, spinach, cassava leaves, tomatoes, cauliflower, cucurbits (including pumpkins, cucumbers and gherkins, squash, watermelon, cantaloupe, honeydew, and other mixed melons) eggplants, chilies and peppers, green onions, dry onions, garlic, leek, other alliaceous vegetables, green beans, green peas, green broad beans, string beans, carrots, okra, green corn, mushrooms, bamboo shoots, beets, chards, capers, cardoons, celery, chervil, cress, fennel, horseradish, marjoram, oyster plant, parsley, parsnips, radish, rhubarb, rutabaga, savory, scorzonera, sorrel, watercress, and other vegetables.

Crop Group 8, is fruits, including, for example, bananas and plantains; citrus fruits; pome fruits; stone fruits; berries; grapes; tropical fruits; miscellaneous fruits; and other fruits. Pome fruits include, for example, apple, pear, quince, and other pome fruits. Tropical fruits include, for example, fig, persimmon, kiwifruit, mango, avocado, pineapple, date, cashew apple, papaya, breadfruit, carambola, chrimoya, durian, feijoa, guava, mombin, jackfruit, longan, mammee, mangosteen, naranjillo, passion fruit, rambutan, sapote, sapodilla, star apple, and other tropical fruits.

Crop Group 9 is fibers. Crop Group 10 is spices. Crop Group 11 is fodder crops. Crop Group 12 is stimulant crops, including, for example, coffee and tea. Crop Group 13 is tobacco and rubber and other crops.

Preferred are Crop Groups 7 and 8. Within Crop Group 7, preferred are tomatoes and cucurbits; more preferred are tomatoes, melons, and cucumbers; more preferred are tomatoes and melons. Within Crop Group 8, preferred are pome fruits and tropical fruits; more preferred are apples, avocados, and guavas; more preferred are avocados.

In the practice of the present invention, plant parts are treated after they are harvested.

The practice of the present invention involves the use of one or more wax. As used herein a wax is a fatty compound that is solid or semisolid over a temperature range that includes at least 15°C to 40°C. Each fatty chain may be saturated or unsaturated. In addition to the one or more fatty chain, suitable waxes may have any of a wide variety of other chemical groups. Preferred waxes are selected from hydrocarbons, monoesters, multi-esters, ketones, alcohols, aldehydes, acids, acid salts, sterol esters, terpenes, and mixtures thereof.

Hydrocarbon waxes include hydrocarbons having 12 to 120 carbon atoms. A hydrocarbon molecule in a hydrocarbon wax may be straight, branched, nonaromatic cyclic, or a combination thereof. Hydrocarbon waxes usually exist as a mixture of 2 or more different hydrocarbon molecules. Hydrocarbon waxes include petroleum waxes, which are separated from crude petroleum. Petroleum waxes include paraffin wax, microcrystalline wax, and petrolatum. Paraffin wax has 60% or more by weight straight-chain hydrocarbons, based on the weight of the paraffin, and most of the straight-chain hydrocarbons in paraffin wax typically have 18 to 45 carbon atoms each. Microcrystalline wax has a higher proportion of branched and cyclic hydrocarbons than paraffin wax. Petrolatum is a type of microcrystalline wax that blends well with mineral oil. Hydrocarbon waxes also include polyethylene wax, which is a polyethylene polymer having number-average molecular weight of 20,000 or lower. Preferred among hydrocarbon waxes are petroleum waxes, polylethylenes, and mixtures thereof.

Monoester waxes include any wax that has exactly one ester group. Preferred monoester waxes are esters of a fatty acid with an alcohol selected from fatty alcohols, sterols, terpenoids, hydrocarotenoid, vitamin A, and mixtures thereof. Preferred monoester waxes are esters of a fatty acid with a fatty alcohol. Preferred monoester waxes are esters of a fatty acid having a hydrocarbon chain of 15-19 carbon atoms and a fatty alcohol having a hydrocarbon chain of 29 to 33 carbon atoms.

Multi-ester waxes are waxes that contain two or more ester group in each molecule. These may be formed, for example, when a hydroxylated fatty acid forms two ester linkages with an acid and an alcohol. Other multi-ester waxes are formed when a branched-chain alcohol having two or more hydroxyl groups forms two or more ester linkages with two or more carboxylic acids.

Fatty acid waxes include fatty acids that have hydrocarbon chain with 15-34 carbon atoms. Fatty acids are often found in mixtures of two or more different fatty acids. Fatty acids are also often found in mixtures with monoester waxes. Also included in the fatty acids are salts of fatty acids and acid-base complexes of a fatty acid with a basic compound such as amine compound. A preferred fatty acid wax contains one or more fatty acid and one or more amine compound. A more preferred fatty acid wax is morpholine oleate.

Alcohol waxes include alcohols with one, two or more hydroxyl groups. Some alcohol waxes have hydrocarbons with 19 to 33 carbon atoms. Ketone waxes have one or more ketone groups in each molecule.

Some biologically produced waxes contain mixtures of two or more types of waxes. Biologically produced waxes include waxes obtained directly from plants or animals and waxes produced by alteration (such as, for example, hydrogenation) of materials obtained from plants or animals. Preferred biologically produced waxes are beeswax, insect wax, shellac wax, spermaceti, lanolin, camauba wax, other plant waxes, and mixtures thereof.

Preferred waxes are petroleum waxes, fatty acid waxes, monoester waxes, polyethylene waxes, and mixtures thereof.

The practice of the present invention involves the use of one or more cyclopropene compound. As used herein, a cyclopropene compound is any compound with the formula 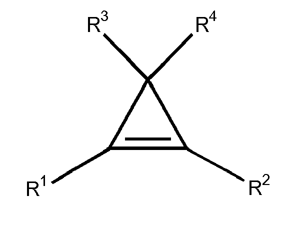 where each R¹, R², R³ and R⁴ is independently selected from the group consisting of H and a chemical group of the formula:

-(L)ₙ-Z

where n is an integer from 0 to 12. Each L is a bivalent radical. Suitable L groups include, for example, radicals containing one or more atoms selected from H, B, C, N, O, P, S, Si, or mixtures thereof. The atoms within an L group may be connected to each other by single bonds, double bonds, triple bonds, or mixtures thereof. Each L group may be linear, branched, cyclic, or a combination thereof. In any one R group (i.e., any one of R¹, R², R³ and R⁴) the total number of heteroatoms (i.e., atoms that are neither H nor C) is from 0 to 6. Independently, in any one R group the total number of non-hydrogen atoms is 50 or less. Each Z is a monovalent radical. Each Z is independently selected from the group consisting of hydrogen, halo, cyano, nitro, nitroso, azido, chlorate, bromate, iodate, isocyanato, isocyanido, isothiocyanato, pentafluorothio, and a chemical group G, wherein G is a 3 to 14 membered ring system.

The R¹, R², R³, and R⁴ groups are independently selected from the suitable groups. Among the groups that are suitable for use as one or more of R¹, R², R³, and R⁴ are, for example, aliphatic groups, aliphatic-oxy groups, alkylphosphonato groups, cycloaliphatic groups, cycloalkylsulfonyl groups, cycloalkylamino groups, heterocyclic groups, aryl groups, heteroaryl groups, halogens, silyl groups, other groups, and mixtures and combinations thereof. Groups that are suitable for use as one or more of R¹, R², R³, and R⁴ may be substituted or unsubstituted.

Among the suitable R¹, R², R³, and R⁴ groups are, for example, aliphatic groups. Some suitable aliphatic groups include, for example, alkyl, alkenyl, and alkynyl groups. Suitable aliphatic groups may be linear, branched, cyclic, or a combination thereof. Independently, suitable aliphatic groups may be substituted or unsubstituted.

As used herein, a chemical group of interest is said to be "substituted" if one or more hydrogen atoms of the chemical group of interest is replaced by a substituent.

Also among the suitable R¹, R², R³, and R⁴ groups are, for example, substituted and unsubstituted heterocyclyl groups that are connected to the cyclopropene compound through an intervening oxy group, amino group, carbonyl group, or sulfonyl group; examples of such R¹, R², R³, and R⁴ groups are heterocyclyloxy, heterocyclylcarbonyl, diheterocyclylamino, and diheterocyclylaminosulfonyl.

Also among the suitable R¹, R², R³, and R⁴ groups are, for example, substituted and unsubstituted heterocyclic groups that are connected to the cyclopropene compound through an intervening oxy group, amino group, carbonyl group, sulfonyl group, thioalkyl group, or aminosulfonyl group; examples of such R¹, R², R³, and R⁴ groups are diheteroarylamino, heteroarylthioalkyl, and diheteroarylaminosulfonyl.

Also among the suitable R¹, R², R³, and R⁴ groups are, for example, hydrogen, fluoro, chloro, bromo, iodo, cyano, nitro, nitroso, azido, chlorato, bromato, iodato, isocyanato, isocyanido, isothiocyanato, pentafluorothio; acetoxy, carboethoxy, cyanato, nitrato, nitrito, perchlorato, allenyl, butylmercapto, diethylphosphonato, dimethylphenylsilyl, isoquinolyl, mercapto, naphthyl, phenoxy, phenyl, piperidino, pyridyl, quinolyl, triethylsilyl, trimethylsilyl; and substituted analogs thereof.

As used herein, the chemical group G is a 3 to 14 membered ring system. Ring systems suitable as chemical group G may be substituted or unsubstituted; they may be aromatic (including, for example, phenyl and napthyl) or aliphatic (including unsaturated aliphatic, partially saturated aliphatic, or saturated aliphatic); and they may be carbocyclic or heterocyclic. Among heterocyclic G groups, some suitable heteroatoms are, for example, nitrogen, sulfur, oxygen, and combinations thereof. Ring systems suitable as chemical group G may be monocyclic, bicyclic, tricyclic, polycyclic, spiro, or fused; among suitable chemical group G ring systems that are bicyclic, tricyclic, or fused, the various rings in a single chemical group G may be all the same type or may be of two or more types (for example, an aromatic ring may be fused with an aliphatic ring).

Preferably, one or more of R¹, R², R³, and R⁴ is hydrogen or (C₁-C₁₀) alkyl. More preferably, each of R¹, R², R³, and R⁴ is hydrogen or (C₁-C₈) alkyl. In some embodiments, each of R¹, R², R³, and R⁴ is hydrogen or (C₁-C₄) alkyl. More preferably, each of R¹, R², R³, and R⁴ is hydrogen or methyl. More preferably, R¹ is (C₁-C₄) alkyl and each of R², R³, and R⁴ is hydrogen. More preferably, R¹ is methyl and each of R², R³, and R⁴ is hydrogen, and the cyclopropene compound is known herein as "1-MCP."

Preferably, a cyclopropene compound is used that has boiling point at one atmosphere pressure of 50°C or lower; or 25°C or lower; or 15°C or lower. Independently, preferably a cyclopropene compound is used that has boiling point at one atmosphere pressure of -100°C or higher; -50°C or higher; or -25°C or higher; or 0°C or higher.

The composition of the present invention preferably includes at least one molecular encapsulating agent. More preferably, at least one molecular encapsulating agent encapsulates one or more cyclopropene compound or a portion of one or more cyclopropene compound. A complex that contains a cyclopropene compound molecule or a portion of a cyclopropene compound molecule encapsulated in a molecule of a molecular encapsulating agent is known herein as a "cyclopropene compound complex."

Preferably, at least one cyclopropene compound complex is present that is an inclusion complex. In such an inclusion complex, the molecular encapsulating agent forms a cavity, and the cyclopropene compound or a portion of the cyclopropene compound is located within that cavity.

Independently, in some of such inclusion complexes, the interior of the cavity of the molecular encapsulating agent is substantially apolar or hydrophobic or both, and the cyclopropene compound (or the portion of the cyclopropene compound located within that cavity) is also substantially apolar or hydrophobic or both. While the present invention is not limited to any particular theory or mechanism, it is contemplated that, in such apolar cyclopropene compound complexes, van der Waals forces, or hydrophobic interactions, or both, cause the cyclopropene compound molecule or portion thereof to remain within the cavity of the molecular encapsulating agent.

The amount of molecular encapsulating agent can usefully be characterized by the ratio of moles of molecular encapsulating agent to moles of cyclopropene compound. Preferably, the ratio of moles of molecular encapsulating agent to moles of cyclopropene compound is 0.1 or larger; more preferably 0.2 or larger; more preferably 0.5 or larger; more preferably 0.9 or larger; more preferably 1.0 or larger. Independently, in some of such embodiments, the ratio of moles of molecular encapsulating agent to moles of cyclopropene compound is preferably 10 or lower; more preferably 5 or lower; more preferably 2 or lower; more preferably 1.5 or lower.

Suitable molecular encapsulating agents include, for example, organic and inorganic molecular encapsulating agents. Suitable organic molecular encapsulating agents include, for example, substituted cyclodextrins, unsubstituted cyclodextrins, and crown ethers. Suitable inorganic molecular encapsulating agents include, for example, zeolites. Mixtures of suitable molecular encapsulating agents are also suitable. Preferably, the encapsulating agent is alpha-cyclodextrin, beta-cyclodextrin, gamma-cyclodextrin, or a mixture thereof. In some embodiments of the invention, alpha-cyclodextrin is used. The preferred encapsulating agent will vary depending upon the structure of the cyclopropene compound or cyclopropene compounds being used. When 1-MCP is used, the preferred molecular encapsulating agent is alpha-cyclodextrin. Any cyclodextrin or mixture of cyclodextrins, cyclodextrin polymers, modified cyclodextrins, or mixtures thereof can also be utilized pursuant to the present invention.

The practice of the present invention involves a coating composition. A coating composition is a composition that is capable of being applied in a layer on the surface of a plant part. The layer may be continuous or discontinuous. Preferred are layers that, immediately after they are applied to the surface, have thickness of from 10 micrometer to 1 mm.

The coating composition contains wax and one or more cyclopropene compound. It is useful to characterize the ratio (the "CP/wax ratio") of the weight of the total of all cyclopropene compound(s) to the weight of the total of all wax(es). A useful unit for that ratio is "ppm," to denote the parts by weight of cyclopropene(s) per million parts by weight of wax(es). Another useful unit for that ratio is "%" to denote the parts by weight of cyclopropene(s) per hundred parts by weight of wax(es). Preferred are coating compositions having CP/wax ratio of 0.2 ppm or higher; more preferred is 0.5 ppm or higher; more preferred is 1 ppm or higher. Independently, preferred are coating compositions having CP/wax ratio of 0.5% or lower; or 0.2% or lower.

Preferred coating compositions are either liquid compositions or are spreadable solid compositions. More preferred are either liquid compositions or are semisolid composition.

Preferred liquid coating compositions contain 40% to 99% by weight, based on the weight of the composition, of a continuous liquid medium. Ingredients are dissolved or dispersed in the continuous liquid medium. Preferred continuous liquid media contain water; more preferred are continuous liquid media in which the amount of water, by weight based on the weight of the continuous liquid medium, is 50% or more; more preferred is 80% or more; more preferred is 95% or more.

In a liquid coating composition, if the continuous liquid medium contains 50% or more water by weight, it is preferred that some or all of the wax is dispersed in the continuous liquid medium. When the wax is so dispersed, it is preferred that one or more surfactant is present in the liquid coating composition.

Liquid coating compositions, when the continuous liquid medium contains water, preferably contain one or more chelating agents. A "chelating agent" is a compound that contains two or more electron-donor atoms that are capable of forming coordinate bonds with a metal atom, and a single molecule of the chelating agent is capable of forming two or more coordinate bonds with a single metal atom. Preferred chelating agents are aminocarboxylic acids, 1,3-diketones, hydroxycarboxylic acids, polyamines, aminoalcohols, aromatic heterocyclic bases, phenol, aminophenols, oximes, Shiff bases, sulfur compounds, and mixtures thereof. More preferred are one or more aminocarboxylic acids, one or more hydroxycarboxylic acids, one or more oximes, or a mixture thereof. Preferred aminocarboxylic acids are ethylenediaminetetraacetic acid (EDTA), hydroxyethylethylenediaminetriacetic acid (HEDTA), nitrilotriacetic acid (NTA), N-dihydroxyethylglycine (2-HxG), ethylenebis(hydroxyphenylglycine) (EHPG), and mixtures thereof. Preferred hydroxycarboxylic acids are tartaric acid, citric acid, gluconic acid, 5-sulfoslicylic acid, and mixtures thereof. More preferred is EDTA.

When a chelating agent is used, the preferred amount of chelating agent, by weight of chelating agent based on the parts by weight of water, is 1 part per million (ppm) or more; more preferred is 5 ppm or more. Independently, the preferred amount of chelating agent, by weight of chelating agent based on the parts by weight of water, is 200 ppm or less; more preferred is 100 ppm or less; more preferred is 50 ppm or less.

In liquid coating compositions, the preferred amount of wax, by weight based on the weight of the liquid coating composition, is 5% or higher; more preferred is 10% or higher; more preferred is 15% or higher. Independently, in liquid coating compositions, the preferred amount of wax, by weight based on the weight of the liquid coating composition, is 60% or lower; more preferred is 50% or lower; more preferred is 40% or lower.

In a semisolid coating composition, the preferred amount of wax is, by weight based on the weight of the semisolid coating composition, 61 % or more; more preferred is 75% or more; more preferred is 90% or more; more preferred is 95% or more.

When applying a semisolid coating composition to fruits or vegetables, the amount applied is preferably, in milligrams of coating composition per kilogram of fruits or vegetables, 1 mg/kg or more; more preferably 2 mg/kg or more; more preferably 5 mg/kg or more; more preferably 10 mg/kg or more. Independently, when applying a semisolid coating composition to fruits or vegetables, the amount applied is preferably, in milligrams of coating composition per kilogram of fruits or vegetables, 200 mg/kg or less; more preferably 100 mg/kg or less.

Coating compositions may contain one or more optional ingredients in addition to wax and cyclopropene compound. Preferred coating compositions also contain one or more molecular encapsulting agent; more preferred are molecular encapsulating agents that encapsulate one or more cyclopropene compound.

Coating compositions may contain one or more optional adjuvant. Suitable adjuvants include, for example, surfactants, oil, chelating agents, and mixtures thereof. Suitable oils include mineral oil.

Preferred coating compositions either contain no starch or else contain, at most, a negligible amount of starch. More preferred coating compositions contain no starch. Preferred coating compositions either contain no polyvinyl alcohol or else contain, at most, a negligible amount of polyvinyl alcohol. More preferred coating compositions contain no polyvinyl alcohol. Preferred coating compositions either contain no non-fatty polymer or else contain, at most, a negligible amount of non-fatty polymer. More preferred coating compositions contain no non-fatty polymer. Preferred coating compositions either contain no non-fatty compound that has molecular weight of 5,000 or above or else contain, at most, a negligible amount of non-fatty compound that has molecular weight of 5,000 or above. More preferred coating compositions contain no non-fatty compound that has molecular weight of 5,000 or above.

The coating composition may be applied to the surface of the plant part by any method. Preferred methods are dipping the plant part into the coating composition; spraying the coating composition onto the surface of the plant part; applying the coating composition onto the surface of the plant part using an applicator; and combinations thereof. Preferred applicators are brushes, blades, rods, fabrics, and combinations thereof; more preferred are brushes.

Preferred methods of applying the coating composition to the surface of the plant part are the following: method 1, in which a plant part is dipped into a liquid coating composition, and method 2, in which a semisolid coating composition is brushed onto the surface of a plant part.

It is to be understood that for purposes of the present examples that each operation disclosed herein is performed at 25°C unless otherwise specified.

### EXAMPLES

In the following Examples, these abbreviations are used:
- MCP =: 1-methylcyclopropene
- DL231 =: Decco Lustr^{™} 231 coating, aqueous emulsion of morpholine oleate, camauba wax, and shellac, from Decco, Cerexagri Inc.
- DL202 =: Decco Lustr^{™} 220 coating, aqueous emulsion of morpholine oleate, paraffin, and polyethylene, from Decco, Cerexagri Inc.
- PNPL251 =: Peach, Nectarine & Plum Lustr^{™} coating, aqueous emulsion of mopholine oleate, paraffin, mineral oil, and camauba wax, from Decco, Cerexagri Inc.
- RH =: relative humidity
- P1 =: powder containing encapsulation complex of alpha-cyclodextrin and MCP, also contains dextrose and an amino acid salt.
- P2 =: powder containing encapsulation complex of alpha-cyclodextrin and MCP, also contains dextrose.
- P3 =: containing encapsulation complex of alpha-cyclodextrin and MCP.

### Example 1: Wax Coatings on Avocados

Hass avocados were premium grade, color stage 1 (100% light green), were shipped from a commercial grower in Oxnard, CA to the testing laboratory in Davis, CA. Treatments were performed in the day of arrival.

Coating compositions were made by adding EDTA (10 parts by weight per million parts by weight of water), followed by the wax emulsion (if used), as supplied by the manufacturer, and mixed for 5 minutes. The ratio of water to wax emulsion was as follows:

| Sample No. | Wax Emulsion | parts by weight of wax emulsion as supplied. | parts by weight of water |
|---|---|---|---|
| 1-1C | none | -- | -- |
| 1-2C | none | -- | -- |
| 1-3 | DL231 | 2 | 1 |
| 1-4 | DL202 | 1 | 4 |
| 1-5 | PNPL251 | 1 | 4 |

Sample 1-1C was a comparative example (dry control, not dipped at all). Sample 1-2C was a dipping solution of water with no wax but with powder P2, with the amount of powder P2 to yield 300 microgram of 1-MCP per liter of dipping solution.

To make samples 1-3, 1-4, and 1-5, water was mixed with coating agent and with amino acid salt to yield the same concentration of amino acid salt as in 1-2C. Then powder P1 was added to give 300 microgram of 1-MCP per liter of dipping solution, and the composition was mixed for 2 minutes and then allowed to stand for 5 minutes. Avocados were then dipped into the dipping solution, held for 5 minutes, and set on a shelf at room temperature to dry. Dry avocados were placed in a cooler at 21°C and 65-75% RH. Control avocados were not dipped and were placed in a different cooler at the same temperature and relative humidity.

After 3 days, fruit color was rated every day using a hedonic scale where 1= 100% green, 2= 75% green, 3= 50% green-purple and 4=100 % purple. Fruit firmness (Newtons and pounds) was measured at day 5 and 10 with the Fruit Texture Analyzer (FTA) with an 8-mm probe that penetrated to a depth of 5 mm depth. Skin was removed before firmness was measured, and two measurements were taken per fruit.

Ripeness was recorded every day after treatment, according to hand feel firmness and external appearance. Days to ripen were calculated from these observations.

The avocados were assessed for color development. Samples 1-3 and 1-5 developed color more slowly than the dry control but more quickly than the sample dipped in MCP-only. Sample 1-4 developed color the slowest of all.

The avocados were assessed for firmness. The results were as follows. All of the Example treatments gave better firmness than the comparative treatments.

| | Firmness at 5 days | | Firmness at 10 days | |
|---|---|---|---|---|
| Example | Newtons | lb | Newtons | lb |
| 1-1C | 3.27 | 0.74 | 2.19 | 0.49 |
| 1-2C | 3.72 | 0.84 | 3.10 | 0.70 |
| 1-3 | 6.81 | 1.53 | 5.13 | 1.15 |
| 1-4 | 14.41 | 3.23 | 11.22 | 2.52 |
| 1-5 | 5.75 | 1.29 | 4.68 | 1.05 |

The avocados were also assessed for days to ripeness. All of the examples had equal or greater days to ripeness as the comparatives. Thus the examples had the benefits of the coating and had delayed ripening at least as high as 1-2C.

| Example | Days to Ripeness |
|---|---|
| 1-1C | 3 |
| 1-2C | 6 |
| 1-3 | 7 |
| 1-4 | 12 |
| 1-5 | 6 |

### Comparative Example 2: Non-Waxy Coating

Tuscan melons were harvested and cooled in Cantua Creek, CA, then transported to the testing facility in Davis, CA the following day. The pulp temperature on arrival was 11°C to 12°C. The fruit was cooled overnight to 5°C and then, the following day, given a quality assessment and treated. After treatment, fruit was stored for 8 days at 5°C and 80% to 90% RH, then transferred to room temperature for 8 days, then evaluated.

Freshseal^{™} coating is an aqueous coating, believed to contain non-fatty polymer, from BASF.

The treatments were as follows. Liquid coating composition was made with the ingredients shown below. Fruit was dipped in the coating composition and held for the amount of time shown below. "Coating solids" is the weight percent of the solids of the coating composition based on the total weight of the coating composition. Powder P1 was added to the coating composition so that the amount of MCP was one part by weight of MCP per million parts by weight of the coating composition. The samples were evaluated for the following criteria:
● weight loss
● external color, using a 5-point scale (1=100% green, and 5=100% yellow)
● average number of sunken discolored areas (SDA)
● Firmness, as tested in Example 1
Results were as follows:

| Comparative Example No. | coating | ppm of MCP | dip time | % weight loss | color | SDA | Firmness (kgf) |
|---|---|---|---|---|---|---|---|
| initial | | | | 0 | 2.50 | 0 | 2.27 |
| 2-1C | none | 0 | none | 4.53 | 4.08 | 2.38 | 0.55 |
| 2-2C | none | 1 | 5 min. | 4.65 | 3.58 | 1.50 | 0.55 |
| 2-3C | Freshseal^{™} | 0 | 5 min. | 5.06 | 4.50 | 2.13 | 0.32 |
| 2-4C | Freshseal^{™} | 1 | 5 min. | 4.52 | 4.21 | 1.96 | 0.43 |
| 2-5C | Freshseal^{™} | 1 | 1 min. | 4.09 | 3.88 | 1.63 | 0.45 |

There was no significant difference in weight loss among the samples tested. In external color, SDA, and firmness, all coated examples were worse than 2-2C, the sample with MCP without coating.

### Example 3: Wax Coatings on Tomatos

Tomatoes were coated with Triwax^{™} coating (Tri-Pak Machinery, Inc.) For the "MCP" samples, Powder P3 was added to the Triwax^{™} coating to give 0.09% MCP by weight based on the weight of the coating composition. The coating composition was applied to a cloth and rubbed onto the tomatoes.

Tomatoes were stored at room temperature, and the hue was measured. In this hue measurement high numbers mean the color is more green (i.e., the tomato is less ripe). Results were as follows. The example treatment (3-3) desirably retarded ripening compared to the comparative examples.

| | | hue | | |
|---|---|---|---|---|
| Example No. | Treatment | Day 1 | Day 4 | Day 6 |
| 3-1C | none | 107 | 68 | 53 |
| 3-2C | Tri-wax only | 109 | 75 | 57 |
| 3-3 | Tri-wax + MCP | 108 | 104 | 98 |

### Example 4: Waxy Coating on Tomatoes and Guavas

Coating compositions were made. When wax was present, it was 3.6% by weight camauba wax based on the weight of the coating composition. When MCP was present, sufficient P1 was added to give 30.7 mg MCP per liter. The control composition was water alone. Coating composition was mixed slowly for 1 minute. Fruit was immersed in the coating composition for 30 seconds. The treatments were as follows:

| Example No. | Composition |
|---|---|
| 4-1C | water only |
| 4-2C | wax in water |
| 4-3C | MCP in water |
| 4-4 | MCP and wax in water |

Fruit was stored after treatment at 22°C and 80% RH for up to 14 days.

Tomato variety was Debora. When the tomatoes were tested, Samples 4-3C and 4-4 were comparable to each other, and both showed desirable delayed ripening compared to 4-1 and 4-2. It is assumed that 4-3C and 4-4 demonstrated the resistance to weight loss that is given by waxy coatings. Thus Sample 4-4 had the benefits of waxy coating and of treatment with 1-MCP, even though it received only one immersion treatment.

The guava variety was Pedro Sato. The treatments and the results were the same as for tomatoes.

### Example 5: Waxy Coating on Hass Avocados

The treatments were the same as in Example 4. Fruit was evaluated for external color using a rating scale ("0" means 100% green, and "5" means 100% black). The percent of black fruits was observed. External decay was observed (number of fruits out of 40 total that had at least one lesion). Internal decay was evaluated with a rating scale ("0" = no decay; "1" = light decay; "2" = moderate decay; "3" = severe decay). 40 fruits received each treatment. Average results after 14 days were as follows:

| Example No. | Composition | External Color | % Black | External Decay | Internal Decay |
|---|---|---|---|---|---|
| 5-1C | water only | 4.7 | 70 | 12 | 1.7 |
| 5-2C | wax/water | 4.2 | 45 | 9 | 1.0 |
| 5-3C | MCP/water | 3.9 | 22 | 5 | 1.8 |
| 5-4 | MCP/wax/water | 2.3 | 10 | 2 | 0.8 |

Sample 5-4 showed desirable delay of ripening compared to all the other samples.

## Claims

1. A method of treating plant parts comprising forming a coating on the surface of said plant parts by applying a layer of a coating composition to said surface of said plant parts, wherein said coating composition comprises
(a) one or more wax, and
(b) one or more cyclopropene compound.

2. The method of claim 1, wherein said coating composition further comprises one or more molecular encapsulating agent.

3. The method of claim 1, wherein some or all of said cyclopropene is encapsulated in a molecular encapsulating agent.

4. The method of claim 1, wherein the weight ratio of said cyclopropene compound to said wax is from 0.2 ppm to 0.2%.

5. The method of claim 1, wherein said plant parts are selected from the group consisting of fruits and vegetables.

6. The method of claim 1, wherein said plant parts are selected from the group consisting of apples, avocados, tomatoes, guavas, and melons.

7. The method of claim 1, wherein said plant parts are selected from the group consisting of tomatoes and avocados.

8. The method of claim 1, wherein said wax comprises morpholine oleate, petroleum waxes, and mixtures thereof.

9. The method of claim 1, wherein said cyclopropene comprises 1-methylcyclopropene.
